# EUROPEAN PATENT SPECIFICATION

(11) **EP 1 475 926 B1**
(45) Date of publication and mention of the grant of the patent: **22.04.2009**
(21) Application number: 04010463.0
(22) Date of filing: 03.05.2004
(51) Int. Cl.: H04L 12/56

(54) **Routing system for establishing optimal route in wireless personal area network (WPAN) and method thereof**
Verfahren und System zum Aufbau eines optimalen Weges in drahtlosen persönlichen Netzwerken (WPAN)
Procédé et système pour l'établissement d'une route optimale dans un réseau local personnel sans fil (WPAN)

(30) Priority: 26.02.2004 KR 2004013117; 05.05.2003 US 467555 P
(43) Date of publication of application: 10.11.2004
(73) Proprietor: SAMSUNG ELECTRONICS CO., LTD., Suwon-si, Gyeonggi-do (KR); CITY UNIVERSITY OF NEW YORK (CUNY), New York, NY 10031 (US)
(72) Inventor: Hu, Yu-hui, Dept. of Elec. Eng. of Graduate School, New York, NY 10031 (US); Liu, Yong, Dept. of Elec. Eng. of Graduate School, New York, NY 10031 (US); Zhu, Chun-hui, Dept. Elec. Eng. of Graduate School, New York, NY 10031 (US); Lee, Myung-jong, Dept. Elec. Eng. of Grad. School, New York, NY 10031 (US)
(74) Representative: Grünecker, Kinkeldey, Stockmair & Schwanhäusser Anwaltssozietät

(56) References cited:
- WO-A-02/084956
- PERKINS C E ET AL: "Ad-hoc On-Deman Distance Vector Routing" PROCEEDINGS WMCSA, 25 February 1999 (1999-02-25), pages 90-100, XP002173721
- GORDAY P ET AL: "IEEE 802.15.4 Overview" IEEE 802.15-01/509R0, 12 November 2001 (2001-11-12), pages 1-28, XP002267446
- ROYER E M ET AL: "A REVIEW OF CURRENT ROUTING PROTOCOLS FOR AD HOC MOBILE WIRELESS NETWORKS" IEEE PERSONAL COMMUNICATIONS, IEEE COMMUNICATIONS SOCIETY, US, vol. 6, no. 2, April 1999 (1999-04), pages 46-55, XP000823968 ISSN: 1070-9916

## Description

### BACKGROUND OF THE INVENTION

### 1. Field of The Invention

The present invention relates generally to a wireless personal area network (WPAN), and more particularly, to a routing system and a method for setting up a route from a source node to a destination node in a WPAN

### 2. Description of The Related Art

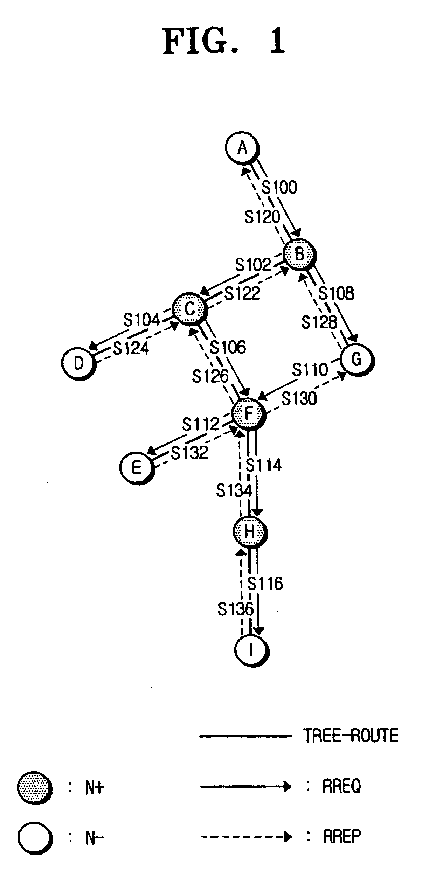

In general, data is transmitted and received between a mobile element and a base station in a mobile communication system. That is, the mobile element and the base station directly transmit and receive data without passing along other nodes. In contrast, a wireless personal area network (WPAN) has been developed to interconnect devices within a very short range. The WPAN is an ad-hoc data communication system enabling multiple nodes to communicate with each other see for example XP 002173721. A transmitting node included in the ad-hoc network transmits data to a receiving node via other nodes. If the receiving node is within the transmitting node's neighborhood, data is directly transmitted between the nodes. Referring now to FIG. 1, data transmission is described according to a conventional algorithm in relation to the nodes configuring the ad-hoc network.

The ad-hoc network of FIG. 1 includes at least two nodes. The nodes are classed into two categories. One is a node maintaining a routing table and is referred to as a "N+". The other is a node without a routing table and is referred to as a "N-"

A conventional method for establishing a route in the ad-hoc network including a N+ and N- will be described below. Let a node A be a source node, and a node I be a destination node. The source node requests a route setup to the destination node. Thus, the node A transmits a route request RREQ message to the adjacent node B to set a route to the node I at step S 100. The node B, which is a N+, generates a routing table using the received RREQ message, and stores the generated routing table. Upon receiving the RREQ message, the node B transmits the RREQ message to the nodes C and G at steps S102 and S108, respectively. The node C, which is a N+, also generates a routing table using the received RREQ message, and stores the generated routing table. Upon receiving the RREQ message, the node C transmits the RREQ message to the nodes D and F at steps S104 and 106, respectively.

Upon receiving the RREQ message, the node G transmits a route reply RREP message to the node B in response to the RREQ message, at step S128. According to the conventional algorithm, the N- in the ad-hoc network transmits the RREP message in response to the RREQ message. The N-, although not the destination node requested in the received RREQ message, transmits the RREP message since a next hop node for the destination node can be discovered based on a cluster-tree router calculation, without having to search for an optimal route. The RREP message from the node G is forwarded to the node A via the node B at step S120. Upon transmitting the RREP message, the node G transmits the RREQ message to the adjacent node F at step S110. In general, the N- knows information on nodes within a certain distance, such as, for example, 1 hop, in the designing phase.

The node D performs the same operations as the node G. Hence, a RREP message generated by the node D is forwarded to the node A via the nodes C and B at steps S124,S122, and S120. Upon receiving the RREQ message from the node C or the node G, the node F transmits the RREQ message to the nodes E and H at steps S112 and S114, respectively. The node E performs the same operations as the node D. The node H forwards the received RREQ message to the node I at step S116. Upon receiving the RREQ message, the node I recognizes that a route has been requested to it by the node A. Accordingly, the node I generates a RREP message in response to the RREQ message. The RREP message is forwarded to the node A along the route of the RREQ message. As a result, the route between the node A and node I is established. Although not described, a N+ having the routing table updates the received RREQ message and forwards the updated RREQ message to the adjacent nodes. In general, the N+ updates and forwards a hop count to the adjacent nodes. A route having the least hop count is selected to be a route between the nodes. In light of the foregoing, the node A receives 4 RREP messages in response to the single RREQ message. Meanwhile, it is not necessary for a N- to send a RREP message.

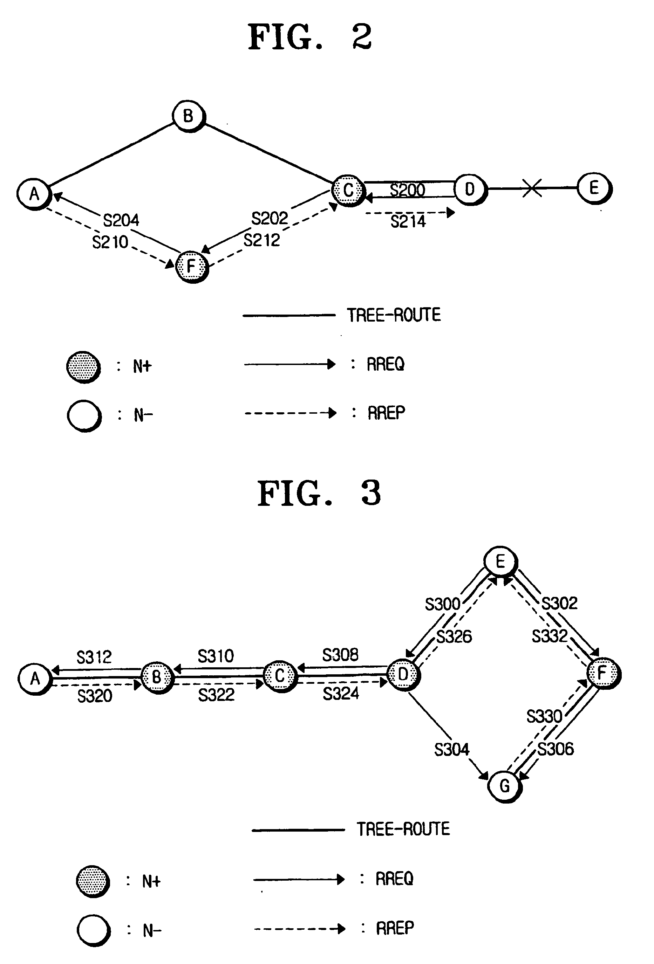

FIG. 2 illustrates another exemplary process for establishing a route using the nodes of the ad-hoc network; the process illustrated in Fig. 2 causes a loop problem. In the present example, a route is established between the node A and the node E, and the route to the node E is established via the nodes B, C, and D according to the request of the node A. However, a wireless channel can be disconnected between the node D and the node E due to channel deterioration as shown in FIG. 2. In this case, the node D forwards a routing error RERR message to the node A. The RERR message includes information which indicates the route failure between the nodes D and E. The RERR message from the node D is forwarded to the node A via the nodes C and B. However, the RERR message may also be forwarded to the node A due to wireless channel deterioration between the nodes A and B, or the nodes B and C.

If a new packet is generated to be transmitted from the node D to the node E, the node D broadcasts the RREQ message to find new route to Node E at step S200 because node D already knew the link is broken due to wireless channel deterioration between the nodes D and E However, the node E cannot receive the RREQ message from the node D if there is a wireless channel disconnection. If the node C receives the RREQ message, the node C broadcasts the RREQ message at step S202. The node F, which received the RREQ message, broadcasts the RREQ message at step S204. Upon receiving the RREQ, the node A, which is a N-, recognizes a route to the destination node E via the node B according to a cluster-tree router calculation and transmits the RREP message to the node F at step S210. Upon receiving the RREP message, the node F transmits the RREP message to the node C at step S212, and upon receiving the RREP message, the node C transmits the RREP message to the node D at step S214. According to the process of Fig. 2, the data packets from the node D are transmitted along the route D→C→F→A→B→C→D, and as a result, the data packets are not transmitted along the established route and an unnecessary loop is generated.

FIG. 3 illustrates still another exemplary process for establishing a route using nodes in the ad-hoc network based on the conventional algorithm; this process of Fig. 3 also results in a loop problem. The node E intends to establish a route to the node A. The node E transmits RREQ messages to the nodes D and F, respectively, at steps S300 and S302. The node D transmits the RREQ messages to the nodes C and G, respectively, at steps S308 and S304. The node F also transmits the RREQ message to the node G at step S306. The node G transmits a RREP message to the node F at step S330. The node F transmits the received RREP message to the source node E at step S332. This is enabled because the route to the source node E can be calculated through the node F based on the cluster-tree router calculation Upon receiving the RREQ message, the node C transmits the RREQ message to the node B at step S310. Upon receiving the RREQ message, the node B transmits the RREQ message to the node A at step S312. Upon receiving the RREQ message, the node A recognizes that it is the destination node for which the route is requested by the node E. Accordingly, the node A generates a RREP message in response to the RREQ message. The generated RREP message is forwarded to the node D via the nodes B and C at steps S320, S322, and S324. The node D forwards the received RREP message to the node E at step 326. The problem occurs when the source node E receives the RREP message from the node G earlier than the node A. In this case, the transmission route of the packets forms a loop along the route D→G→F→D.

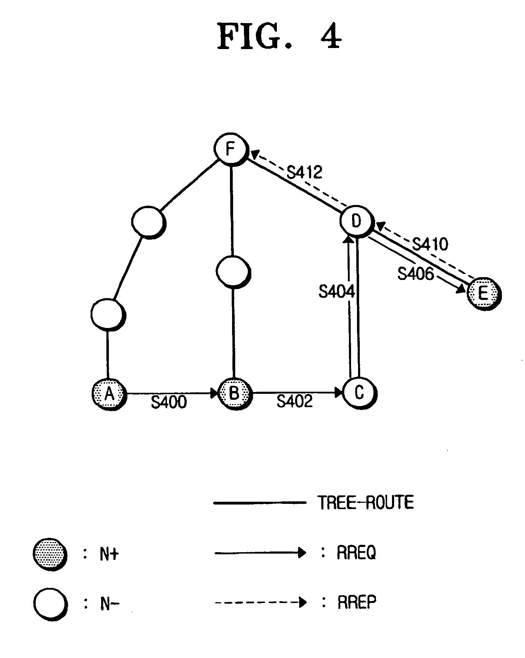

FIG. 4 illustrates yet another exemplary process for establishing a route using nodes in the ad-hoc network based on the conventional algorithm, in which forward and backward routes differ from each other.

The node A intends to establish a route to the node E. The node A determines whether a route to the node E is established by looking up a stored routing table. As it is determined that there is no route for the node E, the node A transmits a RREQ message to the node B at step S400. Upon receiving the RREQ message, the node B also looks up a stored routing table and determines whether a route to the node E is established. As it is determined that there is no route to the node E, the node B transmits the RREQ message to the node C at step S402.

The node C determines whether it is a destination node for which a route is requested by the node A. Since the node C is not the destination node, the node C transmits the RREQ message to the node D along a cluster-tree route at step S404. The node D also determines whether it is a destination node for which a route is requested by the node A. Since the node D is not the destination node, the node D transmits the RREQ message to the node E at step S406. The node E recognizes that it is the destination node for the route that is requested by the node A.

The node E generates a RREP message in response to the RREQ message. The generated RREP message is transmitted to the node D at step S410. The node D transmits the received RREP message to the node F at step S412. The node F forwards the RREP message to the source node A along the tree. As a result, the forward route differs from the backward route, and a solution to this problem is required.

### SUMMARY OF THE INVENTION

An exemplary aspect of the present invention is to solve at least the above problems and/or disadvantages and to provide at least the advantages described below. Accordingly, an exemplary aspect of the present invention is to provide a system and a method for preventing reception of a plurality of RREP messages in response to a RREQ message.

Another exemplary aspect of the present invention is to provide a system and a method for allowing a source node to promptly determine a disconnection of a set route.

Still another exemplary aspect of the present invention is to provide a system and a method for preventing a loop in the routes.

Yet another exemplary aspect of the present invention is to provide a system and a method for establishing a backward route which is the same as a forward route.

Yet another exemplary aspect of the present invention is to provide a system and a method for establishing a single route having a smallest hop count with respect to a single destination node.

To realize the above described aspects of the present invention, a relaying method in a mobile communication system having a plurality of nodes including a destination node and a source node, which intends to set up a route to the destination node, wherein at least one node does not store a routing table. The method includes storing information on a relaying node which relays a route request message using information included in the received route request message, and sending the route request message to neighbor nodes, and forwarding to the node which requests the route setup, a reply message in response to the received route request message, by using the stored information.

A system of routing related to a mobile communication system having a plurality of nodes including a destination node and a source node which intends to establish a route to the destination node, the mobile communication system having at least one node that does not store a routing table. The mobile communication system includes a source node for generating a route request message and sending the generated route request message to a neighbor node, and an intermediate node for storing information on a relaying node using information included in the received route request message; the intermediate node does not store a reply message in response to the received route request message, in a routing table.

### BRIEF DESCRIPTION OF THE FIGURES

These and/or other aspects and advantages of the invention will become apparent and more readily appreciated from the following description of the embodiments, taken in conjunction with the accompanying drawing figures of which:

FIG. 1 is a diagram illustrating one example of a conventional process for establishing a route in an ad-hoc network;

FIG. 2 is a diagram illustrating another example of convention steps for establishing a route in an ad-hoc network;

FIG. 3 is a diagram illustrating still another example of conventional steps for establishing a route in an ad-hoc network;

FIG. 4 is a diagram illustrating yet another example of conventional steps for establishing a route in an ad-hoc network;

FIG. 5 is a flowchart illustrating exemplary steps for establishing a route by a source node, according to an embodiment of the present invention; and

FIG. 6 is a diagram illustrating exemplary steps for establishing a route in an ad-hoc network according to an embodiment of the present invention.

### DETAILED DESCRIPTION OF THE EMBODIMENTS

Reference will now be made in detail to the embodiments of the present invention, examples of which are illustrated in the accompanying figures, wherein like reference numerals refer to the like elements throughout. The embodiments are described below in order to explain the present invention, with reference to the figures.

FIG. 1 illustrates the case when at least two RREP messages are transmitted in response to a single RREQ message. To address the drawback as shown in FIG. 1, a N- can be restricted from transmitting the RREP message. In detail, a N- can transmit the RREP message only when the destination node of the received RREQ message is itself. As a result, the nodes D, E, and G would not transmit the RREP message, and only the node I would generate the RREP message to be forwarded to the node A.

As indicated above, FIG. 2 illustrates the case when a loop results from the route established in the ad-hoc network. To address the drawback as shown in the FIG. 2, a KEEP-ALIVE message can be transmitted in lieu of the RERR message. The KEEP-ALIVE message can include addresses of the source node A and the destination node E. The node E can forward the KEEP-ALIVE message to the node A at a first predetermined time interval. The first predetermined time interval can be adjusted by a user. If the wireless channel is degraded between the nodes of the ad-hoc network, the first predetermined time interval can be adjusted shorter. If the wireless channel is normal between the nodes, the first predetermined time interval can be adjusted longer. The node E can forward the KEEP-ALIVE message along the pre-set route. That is, the node E can forward the KEEP-ALIVE message to the node A along the route D→C→B

The node A can determine whether the KEEP-ALIVE message is received from the node B at a second predetermined time interval. In general, the second predetermined time interval can be set to be longer than the first setup time since the transmission of the KEEP-ALIVE message from the node E to the node A may be delayed due to the wireless channel failure.

The node A can determine whether the KEEP-ALIVE message has been received within the second predetermined time interval. If the node A determines that the KEEP-ALIVE message has been received within the second predetermined time interval, it is recognized that the route between the node A and the node E is normal. If the node A determines that the KEEP-ALIVE message has not been received within the second predetermined time interval, it is recognized that the route between the node A and the node E has failure Thus, the node A could rediscover a new route to the node E. To reduce a time for establishing, and rediscovering a route, a pre-set route is used.

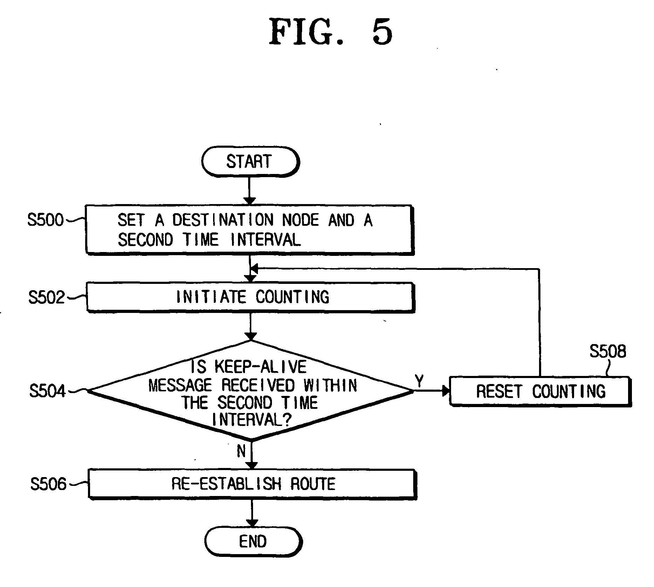

FIG. 5 is a flowchart illustrating certain exemplary steps performed by a source node according to an exemplary embodiment of the present invention. Referring now to FIG. 5, the exemplary steps performed by the source node will be apparent. As described above, a destination node sends a KEEP-ALIVE message by a first predetermined time interval.

The source node sets information on the destination node and a second predetermined time interval corresponding to the destination node at step S500. In general, the source node receives a KEEP-ALIVE message from at least two destination nodes. In the embodiment as shown in FIG. 5, the KEEP-ALIVE message is received from a single destination node for the sake of clarity.

The source node initiates counting at step S502. The source node determines whether the KEEP-ALIVE message is received within the second predetermined time interval at step S504. If the KEEP-ALIVE message is received, the source node resets the counting at step S508. If not, the route is re-established at step S506. After the step S508, the source node returns to the step S502. In light of the foregoing, the re-established route is a pre-set route.

To address the drawbacks as described above with reference to FIGS. 3 and 4, the present invention proposes that a N- store minimal information. According to an exemplary embodiment of the present invention, the RREQ and RREP messages should only include necessary information. The RREQ message can include an address of the source node and a RREQ identifier (ID), an address of the destination node, and a hop count. The RREP message can include an ID of the source node and an address of the destination node, a hop count, and the number ofN+ along the route. The N+ along the route will be described later.

Though the source node E of FIG. 3 receives two RREP messages, the loop problem can be avoided by selecting the route having a smaller hop count along E→D→C→B→A.

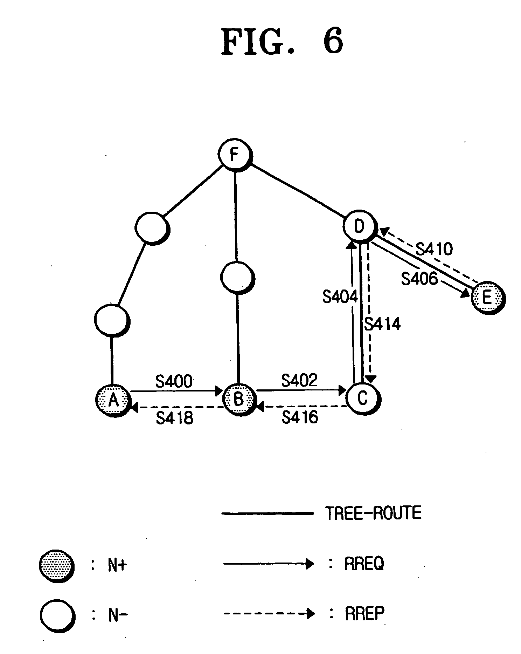

FIG. 6 illustrates a case when a forward route is the same as a backward route.

The node A intends to establish a route to the node E. The transmission of a RREQ message from the node A to the node E is the same as in FIG. 4. The transmission of a RREP message from the node E to the node A is described below in detail.

The node E generates a RREP message in response to the RREQ message. The generated RREP message is transmitted to the node D at step S410. The node D recognizes that the RREQ message corresponding to the RREP message has been received from the node C using a stored routing table. Accordingly, the node D transmits the RREP message to the node C at step S414. The node C recognizes that the RREQ message corresponding to the RREP message has been received from the node B using a stored routing table. Accordingly, the node C transmits the RREP message to the node B at step S416. The node B transmits the RREP message to the node A based on a stored routing table at step S418. As a result, the forward route is the same as the backward route based on the minimal requirement of information storage in N-.

Alternatively, the RREP message may include information on 'border' nodes. The 'border' node indicates a node which connects nodes along other tree routes. Referring back to FIG. 6, the other tree routes include the route from the node F to the node A, the route from the node F to the node B, and the route from the node F to the node C or E. In setting the forward route, the nodes A, B, and C are positioned on different routes, respectively. Thus, the RREP message includes information of the border nodes. The node E transmits the generated RREP message to the node D at step S410. The node D acquires the information on the node C from the received RREP message, and transmits the RREP message to the node C based on the acquired information, at step S414. The node C acquires information on the node B from the received RREP message, and transmits the RREP message to the node B based on the acquired information, at step S416. The node B transmits the received RREP message to the node A by using a stored routing table or information in the RREP message, at step S418. Although not described above, each node updates the received RREP message and transmits the updated RREP message to the next node.

The number of N+ along the route is included in the RREP message so as to transmit data along a route having more N+, when at least two routes are set to the single destination node, since N+ has less error probability than N-.

While the embodiments of the present invention have been described, additional variations and modifications of the embodiments may occur to those skilled in the art once the basic inventive concepts are learned. Therefore, it is intended that the appended claims shall be construed to include both the above embodiments and all such variations and modifications that fall within the scope of the invention.

## Claims

1. A routing method of a device used in a wireless network, the routing method comprising:
receiving, by the device, a Route REQquest (in the following: RREQ) message:
determining, by the device, whether the devise is the destination of the received RREQ message; **characterised by**
transmitting, by the device, a Route REPly (in the following: RREP) message, upon determining that the device has no routing table and that the device is the destination of the RREQ message.

2. The routing method of claim 1, further comprising transmitting the RREQ message to another device, upon determining that the device is not the destination of the RREQ messages.

3. A node for use in a wireless network, the node being adapted to:
- receive a Route REQuest (in the following RREQ) message;
- determine whether the node is the destination of the received RREQ message; **characterised by** the node being adapted to
- transmit a Route REPly (in the following RREP) message, upon determining that , the node has no routing table and that the node is the destination of the RREQ message.

4. The node of claim 3, further being adapted to transmit the RREQ message to another node, upon determining that the node itself is not the destination of the RREQ message.

## Patentansprüche

1. Verfahren zum Bestimmen eines Pfades einer in einem drahtlosen Netzwerk verwendeten Vorrichtung, wobei das Verfahren zum Bestimmen eines Pfades umfasst:
den Empfang einer Route REQuest- (im Folgenden: RREQ-) Nachricht durch die Vorrichtung;
die Entscheidung durch die Vorrichtung, ob die Vorrichtung das Ziel der empfangenen RREQ-Nachricht ist,
**gekennzeichnet durch**
die Übermittlung einer Route REPly- (im Folgenden: RREP-) Nachricht **durch** die Vorrichtung in Reaktion auf die Bestimmung, dass die Vorrichtung keine Routing-Tabelle aufweist und das Ziel der RREQ-Nachricht ist.

2. Verfahren zum Ermitteln eines Pfades nach Anspruch 1, ferner umfassend die Übermittlung der RREQ-Nachricht zu einer anderen Vorrichtung in Reaktion auf die Ermittlung, dass die Vorrichtung nicht das Ziel der RREQ-Nachricht ist.

3. Knoten zur Verwendung in einem drahtlosen Netzwerk, wobei der Knoten dazu konfiguriert ist,
eine Route REQuest- (im Folgenden: RREQ-) Nachricht zu empfangen;
und zu entscheiden, ob der Knoten das Ziel der empfangenen RREQ-Nachricht ist,
**dadurch gekennzeichnet,**
**dass** der Knoten konfiguriert ist zum Übermitteln einer Route-REPly- (im Folgenden: RREP-) Nachricht in Reaktion auf die Ermittlung, dass der Knoten keine Routing-Tabelle aufweist, und dass der Knoten das Ziel der RREQ-Nachricht ist.

4. Knoten nach Anspruch 3, der ferner konfiguriert ist zum Übermitteln der RREQ-Nachricht zu einem anderen Knoten in Reaktion auf die Ermittlung, dass der Knoten selbst nicht das Ziel der RREQ-Nachricht ist.

## Revendications

1. Procédé d'acheminement d'un dispositif utilisé dans un réseau sans fil, le procédé d'acheminement comprenant :
la réception, par le dispositif, d'un message de demande de route (dans la suite : RREQ pour "Route REQest") ;
la détermination, par le dispositif, de ce que le dispositif est, ou non, la destination du message de RREQ reçu ;
**caractérisé par** l'émission, par le dispositif, d'un message de réponse de route (dans la suite : RREP pour "Route REPly"), après détermination de ce que le dispositif ne possède pas de table d'acheminement et de ce que le dispositif est la destination du message de RREQ.

2. Procédé d'acheminement selon la revendication 1, comprenant en outre la transmission, à un autre dispositif, du message de RREQ, après détermination de ce que le dispositif n'est pas la destination du message de RREQ.

3. Noeud pour utilisation dans un réseau sans fil, le noeud étant apte :
à recevoir un message de demande de route (dans la suite : RREQ) ;
à déterminer si le noeud est la destination du message de RREQ reçu ;
**caractérisé en ce que** le noeud est apte à émettre un message de réponse de route (dans la suite : RREP), après détermination de ce que le noeud ne possède pas de table d'acheminement et de ce que le noeud est la destination du message de RREQ.

4. Noeud selon la revendication 3, qui est apte en outre à transmettre, à un autre noeud, le message de RREQ, après détermination de ce que le noeud n'est pas lui-même la destination du message de RREQ.
